(19) Europäisches Patentamt
European Patent Office
Office européen des brevets

(11) Numéro de publication : **0 021 956**
**B1**

(12) **FASCICULE DE BREVET EUROPÉEN**

(45) Date de publication du fascicule du brevet : **21.03.84**

(51) Int. Cl.$^3$ : **G 06 F 15/40**, G 06 F 7/28

(21) Numéro de dépôt : **80400850.6**

(22) Date de dépôt : **11.06.80**

(54) **Dispositif de traitement d'une expression en vue notamment de l'analyse syntaxique.**

(30) Priorité : **11.06.79 FR 7915752**

(43) Date de publication de la demande :
**07.01.81 Bulletin 81/01**

(45) Mention de la délivrance du brevet :
**21.03.84 Bulletin 84/12**

(84) Etats contractants désignés :
**DE GB NL SE**

(56) Documents cités :
**FR-A- 2 289 962**
**FOURTH INTERNATIONAL CONFERENCE ON VERY LARGE DATA BASES, Berlin (Ouest), 13-15 septembre 1978, New York, US, H.O. LEILICH et al.: "A search processor for data base management systems", pages 280-287**

(73) Titulaire : **INRIA INSTITUT NATIONAL DE RECHERCHE EN INFORMATIQUE ET EN AUTOMATIQUE**
**Domaine de Voluceau**
**Rocquencourt F-78150 Le Chesnay (FR)**

(72) Inventeur : **Tusera, Dimitri**
**8, rue Gaston Monmousseau Guyancourt**
**F-78000 Versailles (FR)**
Inventeur : **Rohmer, Jean**
**1, résidence du Pré au Bois**
**F-92420 Vaucresson (FR)**

(74) Mandataire : **Netter, André**
**40, rue Vignon**
**F-75009 Paris (FR)**

**EP 0 021 956 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Dispositif de traitement d'une expression en vue notamment de l'analyse syntaxique.

L'invention a pour objet un dispositif de traitement d'informations, notamment en vue de l'analyse syntaxique.

Des procédés et appareils informatiques proposés jusqu'ici pour le traitement des langages sensitifs de contextes sont relativement très compliqués et dérivent des ordinateurs prévus pour le traitement des fonctions calculables.

On connaît déjà, par exemple par un Article de H.O. LEILICH et al. paru dans FOURTH INTERNATIONAL CONFERENCE ON VERY LARGE DATA BASES, Berlin, 13-15 septembre 1978, intitulé : « A search processor for data bases management systems » pages 280 à 287, une machine de traitement de données comprises dans une base de données de grande taille. Un dispositif d'acquisition est prévu pour extraire des séries de données d'une mémoire de grande capacité dans laquelle est stockée la base de données. Une mémoire d'interrogation est également prévue, qui comprend des séries d'instructions organisées selon un schéma correspondant à la structure des informations stockées dans la mémoire de données. Grâce à cette structure, chaque phrase extraite de la base de données est analysée, élément par élément, selon une séquence d'instructions prédéterminée. En principe, chaque ligne d'instructions de la mémoire comprend un code d'instructions à appliquer à l'élément de rang correspondant dans la séquence interrogée et l'adresse d'un élément de référence à partir duquel une opération est effectuée sur l'élément considéré en fonction de l'instruction respective. Les instructions visent notamment des opérations de comparaison permettant de déterminer si l'élément analysé est plus grand, plus petit ou égal à l'élément de référence correspondant. Le résultat de chaque opération est consigné et transmis à la sortie du dispositif. Un dispositif de commande assure l'admission de chaque phrase dans le dispositif d'entrée et l'analyse de chaque mot en fonction d'une instruction correspondante de la mémoire d'interrogation.

Un tel dispositif, réalisé en technique câblée, permet d'explorer avec une grande vitesse l'ensemble du contenu d'une base de données volumineuse et de transmettre les résultats de la recherche pour chacun des éléments passés en revue à un dispositif de traitement central.

Un tel dispositif, s'il permet d'effectuer une analyse rapide d'un volume de données important lorsque ces données sont organisées suivant une syntaxe rigide, comme par exemple dans un fichier comprenant par exemple, nom, prénom, date de naissance, profession, adresse, etc... est cependant tout à fait dépourvu de souplesse. En effet, la structure des questions qui sont appliquées par ce système est parfaitement rigide. Il n'est pas possible de modifier, en fonction du résultat d'une opération, la suite des instructions. Il n'est pas non plus possible d'exercer un pouvoir de décision à l'égard de l'avance ou de la non-avance d'un élément de l'expression analysée à la fin de chaque instruction.

La présente invention vise à fournir notamment un module d'analyse d'expressions qui permette un traitement beaucoup plus souple, en vue notamment d'une analyse syntaxique. En même temps, elle est conçue pour permettre d'effectuer une telle analyse à grande vitesse, de façon à permettre le traitement de bases de données de grande capacité.

A cet effet, l'invention a pour objet un module pour le traitement d'une expression constituée par une succession d'éléments comprenant des caractères numériques, dans un but d'analyse syntaxique de reconnaissance, de traduction ou analogue du type comprenant une unité d'entrée pour la présentation des éléments de l'expression à interroger, une mémoire comprenant une pluralité de lignes d'instructions adressables par un dispositif d'adressage en correspondance des éléments interrogés dans l'unité d'entrée, chaque ligne de mémoire comprenant un champ correspondant à un code d'instruction et un champ correspondant à une information relative à un élément de référence en liaison avec lequel l'instruction doit être exécutée, un comparateur opérant sur l'élément interrogé sous la commande de la ligne d'instruction adressée, un dispositif de commande et un dispositif de sortie de données fonction du résultat de la comparaison, caractérisé en ce que chaque ligne de la mémoire comprend un champ propre à contenir l'élément de référence et au moins un premier et un deuxième champs chacun pour une adresse d'une ligne d'instruction de la mémoire, en ce qu'un dispositif d'aiguillage du type à portes est commandé par le dispositif de commande pour relier le premier champ ou le deuxième champ au dispositif d'adressage de la mémoire d'instruction suivant que la sortie du comparateur indique une égalité ou une inégalité entre l'élément interrogé dans l'élément d'entrée et l'élément de référence, et en ce que chaque élément interrogé dans le dispositif d'entrée et chaque élément de référence dans le champ respectif de la ligne d'instruction est un caractère.

De préférence, le dispositif de commande est opératoire pour provoquer ou non l'interrogation de l'élément suivant dans le dispositif d'entrée sous la dépendance de la sortie du comparateur.

Grâce à l'agencement du module qui vient d'être brièvement résumé, il est possible d'analyser, en fonction des règles déterminées, des expressions qui peuvent différer non seulement dans le contenu de leurs éléments mais également dans leur structure à l'intérieur d'une « syntaxe » fixée par la mémoire d'instructions.

Ainsi, par exemple, le module permet non seulement d'analyser des fichiers de structure rigide du type évoqué précédemment dans l'art antérieur mais également de reconnaître, à l'intérieur d'expressions déterminées, la présence de certains éléments ou de certaines structures, et cela, dans un nombre de configurations qui peut être très élevé.

Le module qui vient d'être défini permet de faire correspondre à un élément présent à l'entrée, un élément de référence, mémorisé dans la ligne d'instructions, auquel il est comparé. Mais il permet aussi de faire dépendre la suite du processus d'interrogation du résultat de cette comparaison. Selon un mode de réalisation préféré, la fin de l'opération commandée par une instruction déterminée de la mémoire ne se traduit pas automatiquement par l'admission d'un nouvel élément à analyser dans le dispositif d'entrée du module. Au contraire, cette admission est conditionnée par les résultats de l'analyse de l'élément précédent. En particulier, l'admission d'un élément suivant un élément en cours d'analyse n'est autorisée que si le résultat d'une comparaison effectuée en réponse à l'instruction appliquée à l'élément précédent conduit à un résultat d'égalité. Dans le cas contraire, le résultat de l'opération déclenche l'adressage d'une nouvelle instruction, cette dernière pouvant également se traduire par l'application d'une nouvelle opération à l'élément déjà analysé.

A cet égard, et de façon non limitative, le module permet notamment d'effectuer la comparaison d'un élément d'entrée d'une expression avec plusieurs éléments de référence. Il est ainsi possible de connaître l'appartenance de l'élément analysé, non seulement à un ensemble prédéterminé, mais à plusieurs sous-ensembles, en conjonction ou disjonction par exemple.

On parvient à doter ce module d'une très grande puissance d'analyse en prévoyant que le dispositif de commande, non content de gérer l'admission des caractères de l'expression à analyser dans le dispositif d'entrée est lui-même opératoire sous la dépendance de codes caractéristiques stockés dans chacune des lignes de la mémoire d'instructions. On a notamment découvert qu'il était possible, à l'aide d'un petit nombre de codes différents, d'obtenir de hautes performances d'analyse, et cela avec une très grande vitesse.

Selon une forme de réalisation avantageuse, le module comporte en outre au moins une pile grâce à laquelle il peut provisoirement mettre en mémoire l'adresse de certaines instructions adressées en réponse à un code caractéristique prédéterminé dans la mémoire d'instructions, pour venir ultérieurement prélever cette adresse pour réadresser la ligne correspondante dans la mémoire sous la commande d'une autre instruction. Ce dispositif confère au module une capacité d'analyse de langages récursifs (L.R. (1)) dans lesquels la reconnaissance nécessite, lors de la réalisation d'une condition, la vérification qu'une condition préalable a antérieurement été satisfaite.

Ainsi, non seulement l'invention permet d'effectuer les automates d'état fini.

Elle permet également les analyses syntaxiques de langages générés par des grammaires du type LR (1).

Elle trouve utilisation dans la recherche documentaire, les compilateurs, les traducteurs de langages de programmation, les mesures de systèmes informatiques, la reconnaissance et la manipulation des formes, etc.

L'invention vise également une machine faisant application de modules définis comme ci-dessus et destinée à la recherche documentaire et autres applications analogues.

Dans le monde moderne, les textes relatifs à un domaine déterminé, technique ou non technique, deviennent de plus en plus nombreux. Il est devenu pratiquement impossible à un individu de prendre connaissance de tous ces textes, et même d'en connaître l'existence. Lorsqu'une information est souhaitée sur un sujet déterminé, les recherches dans les textes intéressés sont longues et difficiles et les résultats sont aléatoires.

Pour faciliter ce travail, les textes publiés sont souvent confiés à des documentalistes, qui, après lecture d'un texte, retiennent de celui-ci un certain nombre de mots principaux, ou mots-clés, qui doivent, par la suite, permettre à un utilisateur de retenir ou ne pas retenir ledit texte suivant que parmi ces mots-clés figure ou ne figure pas l'un et/ou l'autre des mots que l'utilisateur considérera comme étant révélateur de l'intérêt que peut présenter un texte.

Cette méthode est, en fait, extrêmement rudimentaire : la sélection des textes s'opère la plupart du temps sans nuances, de sorte que, ou bien l'utilisateur est confronté avec un nombre de textes tel que leur lecture est longue, ou bien des textes qui auraient pu être intéressants pour lui ne font pas partie de la sélection qui lui est offerte.

En outre, le choix de mots-clés par le documentaliste échappe difficilement à l'arbitraire, les critères de choix pouvant être différents d'un documentaliste à l'autre et également différents de ceux qui correspondraient aux desiderata d'un utilisateur futur.

L'invention peut éviter ces inconvénients. Elle tire profit de la rapidité avec laquelle un texte peut être lu et ses mots ou analogues reconnus et elle propose de répondre aux questions que peut se poser un utilisateur en lisant à chaque fois le texte dans son intégralité. Elle prévoit que l'utilisateur introduit, dans le module son ou ses critères de choix et l'appareil retient les fragments du texte qui répondent à ces critères.

La sélection peut s'opérer en un temps ou en plusieurs temps.

Dans ce dernier cas, le plus courant, la machine comprend une succession d'étages et seul le premier étage reçoit à sont entrée le texte à partir duquel une sélection doit être opérée et il transforme ce texte en un ou plusieurs caractères traduisant une première phase de sélection, lesquels caractères sont appliqués à l'entrée d'un second étage qui joue un rôle analogue au premier étage.

Ces caractères, traduisant une ou des sélections, constituent dans certains cas une notation ou cotation, et l'invention prévoit de moduler le résultat final en fonction d'une hiérarchie qu'introduit l'utilisateur, et cela par l'intervention d'un traitement informatique dans un ordinateur ou analogue.

L'invention permet de tenir compte de la structure interne d'un texte, par exemple de son titre, du nom de son auteur, de sa date, également de sa longueur, et donne la possibilité d'opérer une sélection très fine permettant finalement l'obtention de résultats inaccessibles jusqu'à présent.

L'invention prévoit de faire apparaître un ou des fragments du ou des textes introduits à l'entrée de la machine.

D'une manière générale, elle fournit un instrument puissant d'exploitation de textes, quelle qu'en soit la nature : technique, commerciale, littéraire, et cela sans que l'utilisateur ait à effectuer un apprentissage quelconque.

Dans la description qui suit, faite à titre d'exemple, on se réfère aux dessins annexés, dans lesquels :

la figure 1 est un schéma d'un module (ou appareil) ;

la figure 2 est représentative d'un tableau de mémoire ;

la figure 3 est un schéma d'une machine comprenant une multiplicité d'appareils ;

la figure 4 est un schéma simplifié d'une machine ;

la figure 5 est un autre schéma encore plus simplifié d'une machine à deux étages.

L'appareil comprend un dispositif 11 (figure 1) contenant une succession de caractères $12_1$, $12_2$, etc., en langage numérique, ces caractères pouvant être des lettres, des signes de ponctuation, des intervalles entre mots, ou blancs, ou tous autres symboles, littéraux ou non. Ces caractères sont déposés à l'entrée du dispositif 11 par un circuit 13 et sont disponibles dans leur ordre d'entrée sur un circuit de sortie 14 qui est relié à une entrée 10 d'un comparateur 17. L'avance des caractères dans le dispositif 11 habituellement dénommé « FIFO » (First In First Out) est commandée par un circuit 15 constituant une sortie d'un dispositif de décodage logique 16.

L'appareil comprend également une mémoire 19 constituée par un tableau 21 composé de lignes d'instruction 22. Chaque ligne est identifiée par son numéro et, dans l'exemple, le tableau comprend seize lignes $22_1$, $22_2$, ... $22_{16}$, le numéro de la ligne étant l'adresse de l'instruction contenue dans la ligne.

Chaque ligne d'instruction est composée au maximum de six champs. A un instant quelconque, une ligne d'instruction est opératoire, à savoir celle qui est indiquée par une adresse courante présente à l'entrée 23 d'un multiplexeur 24 relié aux diverses lignes par des conducteurs respectivement $25_1$, $25_2$ ... $25_{16}$ et l'instruction reste disponible jusqu'à un changement de l'adresse à l'entrée 23 du multiplexeur 24.

Le premier champ $26_{i1}$ d'une ligne d'instruction i est réservé à un code d'opération ou code OP affecté à la ligne et qui contient un nombre compris entre 1 et 16. Un second champ $26_{i2}$ contient un caractère ou une adresse ; il a été dénommé CAR dans les cases correspondantes du tableau 21. Trois autres champs $26_{i3}$, $26_{i4}$, $26_{i5}$ contiennent toujours des adresses. Ils ont été nommés $ALT_1$, SUC (pour « successeur ») et $ALT_2$. Un sixième champ $26_{i6}$ ou $CAR_1$ contient un caractère.

Chaque ligne contient un code d'opération mais certains des autres champs peuvent être vides.

Chaque champ de code $26_{i1}$ est relié par un conducteur $9_{i1}$, à un conducteur 27 relié à une entrée 28 du dispositif de décodage logique 16. Chaque champ CAR $16_{i2}$ est relié par un circuit 29 à une seconde entrée 31 du dispositif comparateur 17 et est également relié par un circuit 32, par l'intermédiaire d'une porte 33, à une ligne omnibus ou bus 34 relié par un conducteur 25 à un registre 36. Celui-ci reçoit, par son entrée 37, des impulsions d'horloge. La sortie 38 du registre 36 est reliée par un conducteur 39 à l'entrée 23 du multiplexeur 24.

Un champ $26_{i3}$ est relié au bus 34 par un circuit 41 comprenant une porte 42.

Un champ $26_{i4}$ est relié au bus 34 par un circuit 43 comprenant une porte 44.

Un champ $26_{i5}$ est relié audit bus par un circuit 45 comprenant une porte 46.

L'ouverture des portes 33, 42, 44, 46 est commandée, à partir du dispositif de décodage logique 16, par l'intermédiaire de conducteurs respectivement 47, 48, 49, 51.

Une autre sortie 52 du dispositif logique 16 commande l'ouverture d'une porte 53 interposée sur un circuit 54 reliant un champ $26_6$ à un second FIFO 55, ou FIFO 2 analogue au FIFO 1, et dont l'entrée 56 fait partie du circuit 54.

Un circuit 57 issu du dispositif de dédocage logique 16, est propre à commander l'ouverture d'une porte 58, interposée entre le circuit 39, issu du registre 36, et un dispositif d'empilage-désempilage 59 ou pile. La sortie 61 dudit dispositif est reliée au bus 34 par l'intermédiaire d'une porte 62, dont l'ouverture est commandée par un circuit 63 issu du dispositif de décodage logique 16.

Le comparateur 17 compare le caractère sortant du dispositif 11 ou FIFO 1 qui lui est appliqué par le circuit 14 à son entrée 10, au caractère sortant d'un champ CAR, qui lui est appliqué à sont entrée 31, par le circuit 29, faisant partie de l'instruction contenue à l'adresse courante introduite dans la mémoire 19 par l'entrée 23. Le comparateur 17 délivre le résultat de la comparaison au dispositif de décodage logique 16 par l'un ou l'autre de trois circuits 65, 66, 67, à savoir le circuit 66 si ce résultat est l'égalité, c'est-à-dire si les caractères qui sont appliqués aux entrées 10 et 31 sont identiques, le circuit 65 si la comparaison montre que le caractère de FIFO 1 est après (dans l'ordre de l'alphabet par exemple) le caractère du champ CAR, et le circuit 67 si la comparaison montre que le caractère de FIFO 1 est avant celui du champ CAR.

Cette comparaison s'effectue en permanence, sans l'intervention du dispositif de décodage 16.

Une impulsion d'horloge, appliquée à l'entrée 37 du registre 36 fait entrer dans celui-ci l'adresse qui est présente à son entrée 35 et qui, notamment provient de l'un des champs $26_2$, $26_3$, $26_4$, $26_5$ à travers l'une des portes 33, 42, 44, 46. Ladite adresse est alors disponible à la sortie 38 du registre et devient l'adresse courante appliquée à l'entrée 23 du multiplexeur et cela jusqu'à l'impulsion d'horloge suivante.

Le dispositif d'empilage-désempilage 59, ou pile, est une mémoire propre à contenir des adresses d'instructions. Dans un tel dispositif, ou LIFO (Last In-First Out), il est possible d'enlever l'adresse se trouvant au sommet de la pile (dépiler) et d'ajouter une adresse en la déposant au sommet de la pile (empiler).

Les instructions du tableau 21 sont de quatre types principaux, auxquels se rattachent un certain nombre de types dérivés. Ces types sont définis par les champs correspondant aux codes $26_1$ et qui, appliqués au dispositif de décodage logique 16 par le circuit 27, provoquent le fonctionnement dudit dispositif comme suit :

Code 1 : la comparaison du CAR de la ligne d'instruction avec le caractère présent à la sortie du FIFO 1 étant effectuée par le dispositif comparateur 17, le dispositif de décodage logique 16 ouvre par le circuit 49, à réception du code 1, la porte 44 si le résultat de la comparaison est l'égalité. Il ouvre la porte 42 si le résultat de la comparaison est « plus petit que » (<). Il ouvre la porte 46 si le résultat de la comparaison est « plus grand que » (>), et cela par l'un ou l'autre des circuits 49, 48 ou 51.

En outre, si le résultat de la comparaison est l'égalité, le dispositif de décodage logique 16 provoque l'avancement d'un caractère dans le FIFO[1] et cela par le circuit 15.

Par contre, si le résultat de la comparaison est l'inégalité, il n'y a pas de commande d'avance dans le dispositif 11.

Code 2 : Pour un tel code, il est prévu deux passages de la ligne d'instruction.

Au premier passage, l'adresse courante présente sur le circuit 39 provenant du registre 36 et à l'entrée 23 est empilée dans le dispositif 59, la porte 58 étant ouverte par le circuit 57 dépendant du dispositif de décodage 16. Dans une ligne d'instruction comprenant un tel code, son champ $26_2$ contient une adresse et c'est la ligne d'instruction de cette adresse qui est rendue opératoire.

Aucune avance du dispositif 11 ou FIFO 1 n'est commandée.

Le dispositif de décodage 16 mémorise que le premier passage a été effectué.

Lors d'une application ultérieure par le circuit 27 du code de la même ligne d'instruction, la mémorisation du premier passage fait connaître au dispositif de décodage logique 16 qu'il s'agit d'un second passage et, pour un tel second passage, le dispositif de décodage logique 16 ouvre l'une des portes 44, 42 ou 46, suivant le résultat de la comparaison effectuée pour l'instruction précédant celle qui comporte un code 2.

Aucune avance dans le dispositif 11 n'est commandée par le dispositif de décodage pour ce second passage.

Code 3 : Appliqué au dispositif de décodage logique 16, il provoque par celui-ci l'ouverture de la porte 44 correspondant à la case $26_4$ de la ligne d'instruction comportant ce code.

Aucune avance du dispositif 11 n'est commandée.

Code 4 : Il rend opératoire le résultat de la comparaison du CAR ou du champ $26_2$ de l'instruction comportant ce code avec le caractère disponible à la sortie du dispositif 11. Si le résultat de la comparaison est l'égalité, comme transmis par le comparateur 17 au dispositif 16 par le conducteur 65, alors ledit dispositif 16 commande l'avance d'un caractère dans le dispositif 11, et cela par le conducteur 15.

En outre, si la pile 59 n'est pas vide, le résultat de la comparaison est mémorisé dans le dispositif de décodage logique 16 et l'adresse contenue au sommet de la pile 59, enlevée de ladite pile, est appliquée à l'entrée du registre 36 par ouverture de la porte 62.

Si, par contre, la pile 59 est vide, le dispositif de décodage logique 16 ouvre l'une des portes 44, 42 ou 46, suivant le résultat de la comparaison.

A ces quatre codes d'instructions principaux se rattachent d'autres codes comme ci-après.

Un code 5, un code 6, un code 7 et un code 8, qui sont identiques dans leur effet respectivement aux codes 1, 2, 3 et 4 comme ci-dessus définis, mais en outre, provoquent toujours la commande d'avance d'un caractère dans le dispositif 11, FIFO 1, et cela par le circuit 15.

Des codes d'instructions 9, 10, 11, etc..., 16, ont la même action que les codes 1, 2, 3, ... 8 respectivement, mais sous réserve de ce qui suit :

Pour les codes 9 et 13, lorsque le résultat de la comparaison par le comparateur 17 entre le caractère sortant du dispositif 11 et celui du champ $26_2$ de la ligne comportant l'un de ces codes est l'égalité, le dispositif de décodage 16 ouvre, par le circuit 52, la porte 53, et le $CAR_1$ que contient la ligne d'instruction dans le champ $26_6$ est transféré dans le dispositif 55 ou FIFO 2 par ouverture de la porte 53.

Pour les codes d'instructions 11 et 15, ce transfert a lieu en tous les cas, quel que soit le résultat de la comparaison.

Pour les codes d'instructions 12 et 16, ce transfert a lieu comme pour les codes 9 et 13, c'est-à-dire seulement si le résultat de la comparaison est l'égalité.

Les codes d'instructions 10 et 14 sont identiques aux codes 2 et 6.

Le dispositif de décodage logique 16 est un dispositif de décision. Pour prendre une décision, il dispose ainsi, d'une part, d'informations qui lui proviennent de l'extérieur et, d'autre part, d'informations mémorisées et gérées par lui.

Les informations qui lui proviennent de l'extérieur sont :

a) le numéro du code caractéristique de la ligne d'instruction qui lui est appliqué par le circuit 27 ;

b) le résultat de la comparaison effectuée par le comparateur 17 et qui lui est appliqué par l'un ou l'autre des conducteurs 65, 66, 67.

Les informations gérées par lui-même comprennent notamment :

a) le résultat de la dernière comparaison effectuée par le dispositif comparateur 17 et qu'il a mis en mémoire ;

b) l'information caractéristique d'un premier passage ou d'un second passage de mise en mémoire pour une information dont le code est égal à 2 ou 6.

Les décisions prises par le dispositif de décodage logique 16 sont :

a) faire avancer les caractères d'un rang dans le dispositif 11 pour faire apparaître à sa sortie le caractère suivant ;

b) ouvrir la porte 58, c'est-à-dire déposer l'adresse de l'instruction courante dans la pile 59 (empiler) ;

c) ouvrir la porte 62 par le circuit 63, ce qui enlève l'adresse se trouvant au sommet de la pile 59 et la fait présenter au registre 36 (dépiler) ;

d) ouvrir la porte 33 permettant le passage du contenu du champ CAR de l'instruction à l'entrée du registre 36 pour devenir l'adresse courante ;

e) ouvrir la porte 42, faisant passer le chmap de la case $ALT_1$ de l'instruction à l'entrée 35 du registre 36 ;

f) ouvrir la porte 44, faisant passer le champ de la case SUC, $26_4$, de l'instruction à l'entrée 35 du registre 36 ;

g) ouvrir la porte 46, faisant passer le champ $ALT_2$ de la case $26_5$ de l'instruction à l'entrée 35 du registre 36 ;

h) ouvrir la porte 53, assurant le dépôt du contenu du champ $CAR_1$ de la case $26_6$ de l'instruction à l'entrée du dispositif FIFO 2, 55.

Ces opérations sont effectuées en nombre variable suivant le code appliqué au dispositif 16 par le circuit 27.

Le dispositif de décodage 16 comprend des moyens pour qu'à un moment quelconque une seule des portes 62, 33, 42, 44, 46 soit ouverte.

Il comprend également des moyens pour qu'à un moment quelconque seule une des portes 58 ou 62 soit ouverte.

L'appareil permet d'effectuer :

a) les automates d'états finis ;

b) les analyses syntaxiques des langages générés par les grammaires de type LR (1).

Il trouve utilisation dans la recherche documentaire, les compilateurs et traducteurs des langages de programmation, les mesures de systèmes informatiques, la reconnaissance et la manipulation des formes, etc.

Le tableau-mémoire peut comprendre des lignes d'instructions dont le code d'instruction est composite, comme suit :

Un code composite résulte de la juxtaposition de trois chiffres représentant l'un et/ou l'autre des codes 1, 4 ; le dispositif de décodage, recevant un tel code composite, fait la sélection, parmi les trois chiffres caractéristiques du code composite, de celui dont le rang correspond au résultat de la comparaison. Si, par exemple, les rangs sont choisis dans l'ordre des cases $26_3$, $26_4$, $26_5$, c'est-à-dire $ALT_1$, SUC et $ALT_2$, si le résultat de la comparaison est plus petit, c'est-à-dire $ALT_1$, le dispositif de décodage choisit le code 1. Si le résultat de la comparaison est l'égalité, le dispositif de décodage 16 choisit le chiffre de rang 2. Si le résultat est au contraire « plus grand que » ($ALT_2$) le dispositif de décodage choisit le code de rang 3.

Exemple :

On se propose d'effectuer une analyse syntaxique des expressions du type ci-après :

| | |
|---|---|
| (x) | (1) |
| (x + (x)) | (2) |
| (((x))) | (3) |

etc.

L'appareil est propre à fournir l'une de deux réponses, à savoir « vrai » ou « faux » suivant qu'à son entrée est introduite une expression du type ci-dessus ou une expression d'un autre type.

Une mémoire comme ci-dessus est préparée en correspondance, le contenu de la mémoire étant ainsi une représentation de la grammaire générant les expressions ci-dessus.

Une telle mémoire peut être symbolisée par le Tableau représenté sur la figure 2.

Dans un exemple, le dispositif 11 ou FIFO 1 contient, en succession, depuis sa sortie $12_1$, les caractères ou signes suivants :

( ou parenthèse ouvrante
x
) ou parenthèse fermante
b correspond à un blanc

en conformité de l'expression :

(x) b (1)

A l'état initial, c'est l'adresse 1 qui est présente sur l'entrée 23 du multiplexeur 24. A l'entrée 10 du comparateur 17 est présente, par le circuit 14, en langage numérique, la parenthèse ouvrante, et sur l'entrée 31, également la parenthèse ouvrante, par la liaison par le circuit 29 avec la case $26_{12}$ de la première ligne qui contient le champ correspondant à ladite parenthèse.

Le code d'opération de cette ligne est le code 1, comme porté sur la case $26_{11}$ de la première ligne d'instruction de la mémoire.

Par application de ce qui a été défini ci-dessus à l'égard du code 1, le dispositif de décodage 16 est activé par le conducteur 65, car la comparaison fournie par le comparateur 17 fournit l'égalité ; il ouvre la porte 44 et c'est le champ de la case $26_{14}$ (SUC pour successeur) qui est appliqué au bus 34, c'est-à-dire la valeur 2. En exécution du code 1, le dispositif de décodage logique 16 provoque l'avance d'une unité dans le dispositif 11 ou FIFO 1 et c'est le caractère *x* qui vient en relation avec le circuit 14.

Une impulsion d'horloge est alors appliquée au registre 36 par le circuit 37. L'adresse courante qui, dans le circuit 39 et à l'entrée 23 du multiplexeur était 1, devient celle qui est présente à l'entrée 35 du registre 36, à savoir 2, ce qui a été schématisé par la flèche 2 (2 signifiant ici le 2<sup>e</sup> temps) sur la partie gauche du Tableau en face de la ligne $26_2$.

Le code d'instruction, présent dans la case $26_{2.1}$ étant le code 2 et appliqué par l'intermédiaire du circuit 27 au dispositif de décodage logique 16, le dispositif 16 mémorise qu'il s'agit d'un premier passage correspondant au code 2 (aucun passage de code autre que celui du code 1 exposé ci-dessus n'ayant encore eu lieu). Le dispositif 16 introduit, par l'ouverture de la porte 58, l'adresse courante, qui est l'adresse 2, dans la pile 59. Il ouvre également la porte 33 et le champ présent dans la case $26_{2.2'}$ qui a la valeur 1, parvient à l'entrée 35 du registre 36.

Une seconde impulsion d'horloge appliquée à l'entrée 37 du registre 36 fait passer ladite valeur 1 dans le circuit 39 et à l'entrée 23 du multiplexeur, ce qui rend opératoire à nouveau la ligne d'instruction $26_1$.

En ce troisième temps, symbolisé par le chiffre 3 à l'extrémité de la flèche en face de la ligne 1, la comparaison a lieu entre le caractère *x* présent à la sortie du dispossitif 11 ou FIFO 1 et la parenthèse ouvrante de la case $26_{1.2}$. Le comparateur fait ressortir, non pas l'égalité mais l'inégalité. Dans un but de simplification, on a considéré comme équivalents, dans l'exemple, « plus petit que » et « plus grand que », et cela en portant le même chiffre dans les cases $26_{1.3}$ et $26_{1.5}$, à savoir le chiffre 5. Le dispositif de décodage logique 16 ouvre l'une des portes 42 ou 46, de sorte que le chiffre 5 est alors présent à l'entrée 35 du registre 36.

A l'impulsion d'horloge qui suit, amenant l'appareil en son 4<sup>e</sup> temps, c'est le chiffre 5 qui est présent à l'entrée 23 et ainsi c'est l'instruction de la ligne $26_5$ qui devient opératoire en ce temps, comme montré par la flèche 4. Le caractère *x* présent dans la case $26_{4.2}$ est appliqué à l'entrée 31 du comparateur qui reçoit à son entrée 10 également le caractère *x*, la FIFO 1 n'ayant pas été avancée dans le temps précédent, comme indiqué ci-dessus en relation avec le code 4 présent dans la case $26_{5.1}$. La FIFO 1 est avancée d'un caractère. Le dispositif de décodage logique 16 mémorise l'information d'égalité qui lui est appliquée par le circuit 65. La pile 59 n'étant pas vide, le dispositif de décodage logique 16 ouvre la porte 62 et la valeur au sommet de la pile — qui est d'ailleurs, en ce temps, la seule valeur contenue dans la pile — à savoir 2, est appliquée à l'entrée 35 du registre 36.

A l'impulsion d'horloge qui suit, début du 5<sup>e</sup> temps, c'est cette valeur 2 qui parvient à l'entrée 23 du multiplexeur, de sorte qu'au cours de ce temps, la condition de l'appareil est schématisée à nouveau par la flèche portée en face de la ligne $26_2$ dudit Tableau, comme symbolisé par le chiffre 5 à l'extrémité de la flèche en regard de la deuxième ligne. C'est à nouveau le code 2 qui est appliqué par le circuit 27 au dispositif de décodage 16. Celui-ci ayant mémorisé le premier passage ou passage impair, sait qu'il s'agit alors d'un second passage, ou passage pair, et l'information de mémorisation est effacée. Le dispositif de décodage 16 ayant, au temps précédent, à savoir le quatrième temps, mis en mémoire l'égalité constatée par le comparateur au cours dudit quatrième temps, au cours du cinquième temps le dispositif 16 rend opératoire le champ $26_{2.4}$ (SUC) par l'ouverture de la porte $44_2$, et c'est la valeur 3 qui parvient au bus 34 et à l'entrée 35 du registre 36.

Par l'avance du dispositif 11 ou FIFO 1, qui a eu lieu au 4<sup>e</sup> temps, c'est maintenant la parenthèse fermante qui est appliquée par le circuit 14 au dispositif comparateur 17.

L'impulsion d'horloge qui suit fait passer la valeur 3 à l'entrée 23 du multiplexeur, de sorte qu'au temps suivant, ou 6<sup>e</sup> temps, la condition est celle schématisée par la flèche 6 placée en face de la ligne 26. Dans ce sixième temps, le code d'opération est un code 1. La comparaison entre le champ de la case $26_{3.2}$ (+) et le caractère appliqué par le circuit 14 fait connaître par le comparateur 17 qu'il n'y a pas égalité. C'est donc la valeur 6, portée dans les cases $26_{3.3}$ et $26_{3.5}$ qui est appliquée, par ouverture des portes 42 et 46 à l'entrée 35 du registre 36.

A l'impulsion d'horloge qui suit, c'est donc la valeur 6 qui est transférée à l'entrée 23 du multiplexeur et au 7<sup>e</sup> temps la condition est celle montrée par la flèche 7 en regard de la ligne 26 du Tableau. Cette ligne contient un code d'instruction 3. Ce code, appliqué au dispositif de décodage 16, provoque l'ouverture de la porte 44, et c'est la valeur 7 qui parvient à l'entrée 35 du registre 36.

A l'impulsion d'horloge qui suit, ou 8<sup>e</sup> temps, c'est la valeur 7 qui est présente à l'entrée 23 comme montré par la flèche 8. A ce temps, c'est le code 4 qui est appliqué au dispositif 16. Le caractère présent dans la case $26_{7.2}$, qui est la parenthèse fermante, comparé avec le caractère appliqué à l'entrée 10, qui est également la parenthèse fermante, révèle l'égalité. Le dispositif d'empilage-désempilage 59 étant vide, c'est la porte 44 qui est ouverte, et la valeur 8 appliquée à l'entrée 35 du registre 36.

A l'impulsion d'horloge suivante, donc au 9<sup>e</sup> temps, la condition est celle montrée par la flèche symbolisée par le chiffre 9, devant la huitième ligne 26. A cette adresse, c'est-à-dire à l'adresse 8, on trouve le code 9 qui est équivalent au code 1. La comparaison s'effectue entre le champ de la case $26_{8.2}$, qui est *b*, et le caractère présent à la sortie du dispositif 11 de FIFO 1, lequel a avancé d'un rang, et qui est également le caractère *b*. A la constatation d'égalité faite par le comparateur 17, rappel étant fait ici que *b* traduit un blanc, c'est la porte 44 qui est ouverte et la valeur 9 est appliquée à l'entrée 35 du registre 36 ; également le contenu de la case $26_{8.6}$ est transféré au dispositif 55 ou FIFO 2 par ouverture de la porte 53 sous la commande du dispositif logique 16, et c'est la lettre V (première lettre du mot VRAI) qui est introduite dans le dispositif 55, traduisant le fait que le contenu du dispositif 11 ou FIFO 1 fait partie de ceux pour lesquels le Tableau de la figure 2 a été préparé, c'est-à-dire est (x) à savoir l'expression (1).

A l'impulsion d'horloge qui suit, la valeur 9 est transférée au circuit 39, et la condition est celle schématisée par la flèche 10, en face de la neuvième ligne du Tableau. Le code d'instruction est le code 11, équivalent au code 3. C'est la valeur 10 portée dans la case $26_{9.4}$ qui est appliquée à l'entrée 35 du registre 36. On sort la lettre R vers le FIFO 2, 55, puis au temps suivant, la lettre A, puis au temps suivant, la lettre I, de sorte qu'à la fin du 12$^e$ temps apparaît le mot VRAI.

L'appareil aurait fait apparaître le mot FAUX si le dispositif 11 avait reçu une expression différente de celle en (1) ci-dessus et également en (2), (3), etc.

Les lignes 12 et 17 portent dans leur case SUC le chiffre 1, ce qui ramène l'appareil dans la condition initiale, soit qu'il ait fait apparaître le mot VRAI, soit qu'il ait fait apparaître le mot FAUX, de sorte qu'il est prêt à traiter une nouvelle expression parvenant à son FIFO d'entrée 11.

On se réfère maintenant à la figure 3.

Les divers caractères d'un texte, qui peut être constitué par un ouvrage scientifique, technique ou autre, une suite d'articles, un catalogue, sont appliquées en succession sous forme numérique par un conducteur 121 à l'entrée 122 d'un premier étage $E_1$ du type décrit ci-dessus dont la sortie 123, constituée par une succession de caractères ou chiffres, également en langage numérique, est appliquée à l'entrée 124 d'un second étage $E_2$, etc. Les étages $E_1$, $E_2$, ... $E_{n-1}$, $E_n$ sont reliés par des circuits $125_1$, $125_2$ ... $125_{n-1}$, $125_n$ à un module de calcul 126. Chacun des étages $E_1$, $E_2$ etc. effectue une sélection en fonction d'un ou de critères qui y sont introduits, à partir d'un contrôleur 127, par des circuits $128_1$, $128_2$, etc. $128_n$. A partir des résultats des diverses sélections qui lui sont appliquées à ses entrées 125, le module de calcul 126 délivre une note qui est appliquée par un circuit 131 à l'entrée 132 d'un module de classement 133 qui, sur une autre entrée 134, reçoit par un circuit 135 le texte à partir duquel la sélection est à effectuer.

Dans le cas, choisi à titre d'exemple, où le texte est constitué par une succession d'articles, à chacun des articles introduit dans le module de classement 133 par l'entrée 134 correspond une note appliquée à l'entrée 132 dudit module. Celui-ci comprend un certain nombre de cases dans lesquelles sont mis en mémoire des articles ou fragments d'articles introduits par l'entrée 134 avec, pour chacun, la note correspondante introduite par l'entrée 132, et à chaque nouvel article, celui-ci est mis ou non en mémoire dans le module 133 suivant que la note attribuée au nouvel article est plus élevée ou non que la note la plus faible des articles déjà mis en mémoire, l'article ayant la note la plus faible étant ainsi remplacé par le nouvel article.

L'utilisateur peut ensuite faire apparaître sur un appareil de visualisation 136 celui des articles ou fragments d'articles dont il souhaite prendre connaissance, après défilé complet du texte et cela en agissant sur le contrôleur 127 relié au module de classement 133 par un circuit 137.

Dans une autre réalisation, le nombre des étages peut être réduit jusques et y compris l'unité, et la sélection peut ne pas être accompagnée par un affichage du fragment ou des fragments retenu(s).

La figure 4 montre schématiquement un étage E, par exemple l'étage $E_1$. Il comprend une mémoire de séquencement 141 du type montré sur la figure 1 dans laquelle ont été introduits un ou des mots clés suivant des lignes d'instruction. Une ligne d'instruction 142 de la mémoire 141 comprend une case 142*c* correspondant à un caractère et au moins deux autres cases correspondant à une première adresse et à une seconde adresse $142a_1$ et $142a_2$, et avantageusement une troisième adresse $142a_3$. Lors de l'arrivée du premier caractère d'un mot par l'entrée $122_1$, celui-ci est comparé au premier caractère du mot clé ou de chacun des mots clés contenus dans la mémoire 141. Suivant que le résultat de la comparaison est l'égalité ou la non égalité, c'est un des circuits 143, 144, 145 reliant les cases $142a_1$, $142a_2$, $142a_3$ à un dispositif de choix d'adresse suivante 146 qui est activé. Dans le cas de l'égalité, la sortie 147 du dispositif 146 commande la comparaison du caractère qui suit avec le caractère qui suit dans le mot clé comme contenu dans la mémoire 141. Dans le cas contraire, c'est-à-dire la non concordance entre le premier caractère appliqué à l'entrée et le premier caractère d'un mot-clé, la comparaison du second caractère introduit à l'entrée (22) se fait avec un blanc contenu dans l'adresse suivante de la mémoire 141 pour déterminer s'il s'agit d'un mot suivant.

Et ainsi de suite.

La comparaison entre les deux caractères a lieu dans un comparateur 151 à deux sorties 152, 153 reliées à deux entrées du dispositif de choix d'adresse suivante 146.

Si l'étage est destiné à la sélection des mots, la détermination d'un blanc par le dispositif de comparaison 151 à la suite de la reconnaissance d'un mot-clé fait intervenir une mémoire des actions 154 qui fait apparaître à la sortie 155 d'une logique des actions 156 un caractère traduisant la présence d'un mot-clé dans le texte analysé d'une manière comparable à ce qui a été expliqué ci-dessus en référence au tableau de la figure 2 pour faire apparaître la lettre V.

Lorsque la machine est prévue pour remplir des fonctions plus complexes, faisant intervenir des conditions, un dispositif de conditions booléennes 157 est prévu, relié à la logique des actions 156, et la mémoire des actions 154 positionne, après la reconnaissance d'un mot-clé, une cellule dudit dispositif.

Le dispositif 157 est, initialement, mis dans la condition correspondant au problème intéressant l'utilisateur par l'actionnement d'un contrôleur 158, lequel est également capable, comme schématisé par les lignes 159, 161 et 162 d'effectuer un ajustement de la mémoire de séquencement, de la mémoire des actions et du module de calcul. La logique des actions 156 envoie également une information au module de calcul qui peut être le module de calcul commun à tous les étages de sélection.

Si, par exemple, dans un texte parvenant à l'entrée 201 (figure 5) d'un étage 202, on a introduit, par l'entrée 203, les critères qui correspondent à la recherche des mots ci-après :

cheval
brebis
auto
route

à l'arrivée d'un mot par l'entrée 201, annoncé par ce fait que la lettre suit un blanc, la comparaison de la première lettre dudit mot avec la première lettre de mots-clés contenus dans l'étage 202 permet de déterminer si cette première lettre est un *c*, un *b*, un *a* ou un *r*. Dans le cas où il n'en est pas ainsi, l'étage cherche le premier blanc du texte qui lui arrive par l'entrée 201 et la comparaison avec la première lettre des modèles reprend après ce premier blanc.

Si la première lettre du mot arrivant est l'une des quatre premières lettres des mots-clés, alors la comparaison se poursuit lettre à lettre.

Dans le cas où l'étage reconnaît que le fragment comprend un mot-clé, il peut, par exemple, affecter au texte la note 1 et, dans le cas où ledit fragment ne comprend pas un mot-clé, il affecte audit fragment la note 0. Ces notes sont mises en mémoire dans ledit étage et peuvent être ensuite traitées en les appliquant à un module de calcul par la sortie 204.

On peut aussi, en variante, affecter le chiffre 1 à la présence du mot « cheval », le chiffre 2 à la présence du mot « brebis », le chiffre 3 à la présence du mot « auto » et le chiffre 4 à la présence du mot « route ».

Dans ce cas, par exemple, par la sortie 205, ces informations peuvent être appliquées à l'entrée 206 d'un second étage 207.

Par l'étage 207, il sera possible, par exemple, de sélectionner un article qui répond à la double condition suivante : contenir au moins une phrase qui contienne à la fois le mot « cheval » et le mot « brebis » et au moins une phrase qui contienne à la fois le mot « auto » et le mot « route ».

La sélection sera obtenue par le traitement des chiffres 1, 2, 3, 4 introduits par l'entrée 206, et en assurant par l'étage 207 la recherche des points (signes de ponctuation) qui séparent les phrases successives du texte.

En variante, on fait correspondre A dans le premier étage aux phrases qui comprennent à la fois « cheval » et « brebis », B aux phrases qui comprennent à la fois « auto » et « route » et C aux autres phrases. L'entrée de l'étage 207 est ainsi constituée par une succession de lettres A ou B ou C. L'étage 207 a pour fonction de faire apparaître à sa sortie 208, par exemple « 1 » lorsqu'il aura reçu à son entrée et A et B, 0 dans le cas contraire.

Un étage comprend donc une mémoire de séquencement destinée à effectuer la comparaison caractère par caractère et, suivant le résultat d'une comparaison, rendre opératoire une adresse ou une autre adresse de la mémoire, et une mémoire des actions qui a pour fonction d'envoyer un caractère à la sortie de l'étage, de positionner une cellule de mémoire d'une condition booléenne, envoyer vers l'étage suivant un caractère qui soit une fonction de l'évaluation d'une condition booléenne et éventuellement envoyer un ordre au module de calcul.

Un étage peut, à la réception d'un article, lui affecter l'une d'une multiplité de notes en fonction de critères prédéterminés, par exemple 256 notes si l'information de sortie est une information à 8 bits, ces notes étant introduites dans une logique qui permet un classement ou une hiérarchisation suivant tout critère prédéterminé.

Le module de calcul relié aux sorties des divers étages réalise la hiérarchisation. Il reçoit les notes des divers étages après qu'un étage ait traité un fragment prédéterminé, ce qui alloue au module de calcul un temps suffisant pour son bon fonctionnement. Ce module de calcul est un ordinateur qui contient des instructions, une mémoire et des programmes.

**Revendications**

1. Module pour le traitement d'une expression constituée par une succession d'éléments comprenant des caractères numériques, dans un but d'analyse syntaxique de reconnaissance, de traduction ou analogue du type comprenant une unité d'entrée pour la présentation des éléments de l'expression à interroger (11), une mémoire (19) comprenant une pluralité de lignes d'instruction adressables par un dispositif d'adressage (24) en correspondance des éléments interrogés dans l'unité d'entrée (11), chaque ligne de mémoire comprenant un champ correspondant à un code d'instruction et un champ correspondant à une information relative à un élément de référence en liaison avec lequel l'instruction doit être exécutée, un comparateur (17) opérant sur l'élément interrogé sous la commande de la ligne d'instruction adressée, un dispositif de commande (16), et un dispositif (55) de sortie de données fonction du résultat de la comparaison, caractérisé en ce que chaque ligne de la mémoire (19) comprend un champ propre à contenir l'élément de référence ($26_2$) et au moins un premier et un deuxième champs ($26_3$, $26_4$, $26_5$)

chacun pour une adresse d'une ligne d'instruction de la mémoire, en ce qu'un dispositif d'aiguillage du type à portes (42, 44, 46) est commandé par le dispositif de commande (16) pour relier le premier champ ($26_4$) ou le deuxième champ ($26_3$, $26_4$, $26_5$) au dispositif d'adressage (24) de la mémoire d'instruction (19) suivant que la sortie du comparateur (17) indique une égalité ou une inégalité entre l'élément interrogé dans l'élément d'entrée (11) et l'élément de référence ($26_2$), et en ce que chaque élément interrogé dans le dispositif d'entrée (11) et chaque élément de référence dans le champ respectif de la ligne d'instruction est un caractère.

2. Module selon la revendication 1, caractérisé en ce que le dispositif de commande (16) est opératoire pour provoquer ou non l'interrogation du caractère suivant dans le dispositif d'entrée (11) sous la dépendance de la sortie (65, 66, 67) du comparateur (17).

3. Module selon la revendication 2, caractérisé en ce que l'interrogation du caractère suivant dans le dispositif d'entrée (11) n'est autorisée que si le dispositif de commande (16) détecte une condition d'égalité à la sortie (65) du comparateur (17).

4. Module selon l'une des revendications 1 à 3, caractérisé en ce que le champ ($26_1$) du code caractéristique de chaque ligne d'instruction est relié au dispositif de commande pour déterminer une séquence opératoire parmi plusieurs séquences possibles en fonction de ces codes.

5. Module selon l'une des revendications 1 à 4, caractérisé en ce que dans les lignes de la mémoire d'instruction le champ ($26_2$) normalement réservé au caractère de référence peut également être relié par le dispositif d'aiguillage au dispositif d'adressage (24).

6. Module selon l'une des revendications 1 à 5, caractérisé en ce que chaque ligne d'instruction (22) comprend trois champs d'adresse ($26_3$, $26_4$, $26_5$) et les moyens d'aiguillage sont propres à commander le dispositif d'adressage (24) de la mémoire en fonction de l'un de ces trois champs selon que le résultat de la comparaison à la sortie du comparateur (17) indique que le caractère interrogé est plus grand, inférieur ou égal au caractère de référence désigné dans la ligne d'instruction.

7. Module selon l'une des revendications 1 à 6, caractérisé en ce qu'il comprend un registre (36) relié à la sortie du dispositif d'aiguillage qui transfère la valeur numérique présente à son entrée au dispositif d'adressage (24) sous la commande d'une impulsion d'horloge pour rendre opératoire la ligne d'instruction correspondant à ladite valeur numérique.

8. Module selon la revendication 1, caractérisé en ce qu'il comprend une pile (59) propre à recevoir une ou plusieurs valeurs numériques à partir dudit registre (36), sous la commande du dispositif de commande (16).

9. Module selon la revendication 8, caractérisé en ce qu'il comprend des moyens pour, sous la commande du dispositif de commande (16), réappliquer audit registre (36) une valeur numérique empilée.

10. Module selon la revendication 4, caractérisé en ce que la mémoire (19) comprend des lignes d'instructions dont les codes se rattachent à quatre types principaux de code.

11. Module selon la revendication 10, caractérisé en ce que, suivant un premier code, on compare le caractère de référence avec un caractère de l'expression d'entrée, en ce que, suivant le résultat de la comparaison, l'égalité ou l'inégalité, on introduit à l'entrée d'un registre en sortie du dispositif d'aiguillage la valeur numérique du champ correspondant dans la ligne d'instruction et on provoque l'avancement d'un caractère de l'expression d'entrée seulement dans le cas de l'égalité.

12. Module selon la revendication 10, comprenant une pile (59) et caractérisé en ce qu'en conformité d'un second code ou code 2, deux passages de la ligne d'instruction sont prévus, un pemier passage dans lequel l'adresse courante est introduite dans la pile (59) et l'adresse que contient la ligne d'instruction comportant ce code est rendue opératoire, et un second passage dans lequel on tient compte du résultat de la comparaison au cours du passage d'une instruction précédente pour appliquer par le dispositif d'aiguillage à l'entrée d'un registre d'adresse (36) la valeur numérique correspondante.

13. Module selon la revendication 12, caractérisé en ce qu'aussi bien au premier passage qu'au second passage aucune avance de caractère dans le dispositif d'entrée n'est commandée.

14. Module selon la revendication 10, caractérisé en ce qu'il comprend un troisième code ou code 3 qui, appliqué au dispositif de commande (16), provoque l'application à l'entrée du dispositif d'adressage (36, 24) d'une adresse correspondant à un champ déterminé de la ligne d'instruction comprenant ce code.

15. Module selon la revendication 10 comprenant une pile et caractérisé en ce qu'il comprend un quatrième code ou code 4 qui, appliqué au dispositif de commande (16) fait commander par celui-ci l'avance d'un caractère dans le dispositif d'entrée (11), seulement si le résultat de la comparaison est l'égalité et qui provoque deux commandes différentes par le dispositif de commande (16) suivant que la pile est vide ou non.

16. Module selon la revendication 15, caractérisé en ce que, si la pile (59) n'est pas vide, le dispositif de commande (16) mémorise le résultat de la comparaison et applique, après l'avoir dépilée, l'adresse contenue au sommet de la pile à l'entrée du dispositif d'adressage (36, 24).

17. Module selon la revendication 15, caractérisé en ce que, si la pile (59) est vide, le dispositif de commande (16), en fonction du résultat de la comparaison, applique au dispositif d'adressage (36, 24) le champ correspondant à l'égalité de la comparaison ou à « plus petit que » ou à « plus grand que », suivant le cas.

18. Module selon la revendication 11 et la revendication 15, caractérisé en ce qu'il comprend des codes supplémentaires résultant de la composition du premier code et du quatrième code, le choix du code de la composition étant effectué en fonction de la comparaison des caractères.

19. Module selon l'une des revendications 10 à 17, caractérisé en ce qu'il comprend quatre codes identiques respectivement auxdits codes mais qui, en outre, provoquent toujours la commande d'avance d'un caractère de l'expression d'entrée.

20. Module selon la revendication 19, caractérisé en ce qu'il comprend huit codes ayant des actions analogues à celles des huit premiers codes et qui, en outre, pour ceux qui correspondent aux codes 1 et 4, commandent le transfert dans le dispositif de sortie (55) d'un caractère que comprend la ligne d'instruction comportant ce code.

21. Module selon la revendication 19, caractérisé en ce que, pour les codes correspondant au code 3, le transfert a lieu quel que soit le résultat de la comparaison.

22. Module selon la revendication 18, caractérisé en ce qu'il comprend des codes dérivés des codes composites d'une façon analogue à ce qui est défini dans les revendications 20 à 22.

23. Machine informatique, caractérisée en ce qu'elle comprend une multiplicité d'étages comportant chacun un module de séquencement selon l'une des revendications 1 à 22 ci-dessus.

24. Machine selon la revendication 23, caractérisée en ce que la sortie d'un module d'un étage est appliquée à l'entrée d'un module de l'étage suivant.

25. Machine selon la revendication 24, caractérisée en ce que des informations provenant de chaque étage sont appliquées à des entrées d'un module de calcul.

26. Machine selon la revendication 25, caractérisée en ce que l'information fournie par le module de calcul est introduite à l'entrée d'un module de classement qui reçoit en permanence le texte introduit dans le premier étage de la machine.

27. Machine selon la revendication 26, caractérisée en ce que le module de classement comporte une multiplicité de champs correspondant chacun à un fragment, et qui sont hiérarchisés en fonction des notes affectées par le module de calcul aux fragments qu'ils contiennent.

28. Machine selon la revendication 27, caractérisée en ce que, lorsque tous les champs du module de classement sont pleins, un nouveau fragment arrivant est conservé ou non suivant que la note qui lui est affectée par le module de calcul est supérieure ou non à celle dudit fragment conservé ayant la note la plus basse.

## Claims

1. A module for processing an expression constituted by a succession of elements comprising digital characters for the purpose of syntax recognition analysis, translation, or the like, of the type comprising an input device (11) for presenting elements of the expression to be interrogated, a memory (19) comprising a plurality of instruction lines which are addressable by an addressing device (24) in correspondance with the interrogated elements of the input unit, each memory line comprising a field which corresponds to an instruction code and a field which corresponds to data relating to a reference element in connection with which the instruction is to be executed, a comparator (17) operating on the interrogated element under the control of the addressed instruction line, a control device (16), and a device (55) for outputting data as a function of the result of the comparison, characterized in that each memory line includes a field suitable for containing a reference element ($26_2$) and at least a first field and a second field ($26_3$, $26_4$, $26_5$) each for one address of an instruction line in the memory, in that a gate type switching device (42, 44, 46) is controlled by the control device (16) to connect the first field (264) or the second field ($26_3$, $26_4$, $26_5$) to the instruction memory addressing device (24) depending on whether the output from the comparator (17) is indicative of equality or inequality between the reference element ($26_2$) and the interrogated element in the input device (11), and in that each interrogated element in the input device (11) and each reference element in its respective instruction line field is a character.

2. A module according to claim 1, characterized in that the control device (16) operates to cause the following character in the input device to be interrogated or not depending on the output (65, 66, 67) from the comparator (17).

3. A module according to claim 2, characterized in that interrogation of the following character in the input device (11) is authorized only if the control device (16) detects a condition of equality at the output (65) of the comparator (17).

4. A module according to any one of claims 1 to 3, characterized in that the field ($26_1$) of the code characterizing each instruction line is connected to the control device to select a sequence of operations from a plurality of possible sequences as a function the codes.

5. A module according to any one of claims 1 to 4, characterized in that the field ($26_2$) in the instruction memory lines which is normally reserved for the reference character may also be connected via the switching device to the addressing device (24).

6. A module according to any one of claims 1 to 5, characterized in that each instruction line (22) includes three address fields ($26_3$, $26_4$, $26_5$) and the switching means are suitable for controlling the memory addressing device (24) as a function of one of said three fields depending on whether the result of the comparison at the output from the comparator (17) is indicative of the interrogated character being greater than, less than or equal to the designated reference character in the instruction line.

7. A module according to any one of claims 1 to 6, characterized in that it includes a register (36) connected to the output of the switching device to transfer the digital value present at its input to the addressing device (24) under the control of a clock pulse in order to bring into operation the instruction line which corresponds to the said digital value.

8. A module according to claim 1, characterized in that it includes a stack (59) suitable for receiving one or more digital values from said register (36) under the control of the control device (16).

9. A module according to claim 8, characterized in that it includes means for reapplying a stacked digital value to the said register (36) under the control of the control device (16).

10. A module according to claim 4, characterized in that the memory (19) includes instruction lines having codes taken from four main types of code.

11. A module according to claim 10, characterized in that according to a first code the reference character is compared with a character of the input expression, and in that depending on the result of the comparison being equality or inequality the digital value in the corresponding field of the instruction line is applied to the input of a register at the output of the switching device, and the input expression is advanced by one character only in the event of equality.

12. A module according to claim 10, including a stack (59) and characterized in that according to a second code or code 2, two passes of the instruction line are provided, a first pass in which the current address is applied to the stack (59) and the address contained in the instruction line including said code is rendered operative, and a second pass in which account is taken of the comparison of a preceding instruction to apply the corresponding digital value to the input of an address register (36) via the switching device.

13. A module according to claim 12, characterized in that the input device is controlled, both during the first pass and during the second pass, not to advance a character.

14. A module according to claim 10, characterized in that it includes a third code or code 3 which, when applied to the input of the control device (16), causes an address to be applied to the input of the addressing device (36, 24), said address corresponding to a determined field in the instruction line containing the code.

15. A module according to claim 10, including a stack and characterized in that it includes a fourth code or code 4 which, when applied to the input of the control device (16), causes a character to be advanced in the input device (11) under the control of the control device only if the result of the comparison is equality, and causes the control device (16) to perform two different commands depending on whether the stack is empty or not.

16. A module according to claim 15, characterized in that, if the stack (59) is not empty, the control device (16) stores the result of the comparison and takes the address off the top of the stack and applies it to the input of the addressing device (36, 24).

17. A module according to claim 15, characterized in that, if the stack (59) is empty, the control device (16), applies an address to the input of the addressing device (36, 24), said address being taken from the field corresponding to « equal to », « less than », or « greater than » depending on the result of the comparison.

18. A module according to claim 11, and to claim 15, characterized in that it includes supplementary codes resulting from compounding the first code and the fourth code, the choice of code from the compound being performed as a function of the comparison of the characters.

19. A module according to any one of claims 10 to 17, characterized in that it includes four codes identical to the said four codes respectively, but which additionally cause the input expression to advance by one character under all circumstances.

20. A module according to claim 19, characterized in that it includes eight codes having analogous functions to the eight codes mentionned but which additionally, in respect of the codes corresponding to codes 1 and 4, cause a character included in the instruction line containing the code to be transferred to the output device (55).

21. A module according to claim 19, characterized in that, for the codes corresponding to code 3, the transfer takes regardless of the result of the comparison.

22. A module according to claim 18, characterized in that it includes codes derived from the compound codes in a manner analogous to that defined in claims 19 to 21.

23. A computing machine, characterized in that it includes a multiplicity of stages each comprising a sequencer module according to any one of claims 1 to 22 above.

24. A machine according to claim 23, characterized in that the output from a module in one stage is applied to the input of a module in the following stage.

25. A machine according to claim 24, characterized in that data coming from each of the stages is applied to a caluation module.

26. A machine according to claim 25, characterized in that the data provided by the calculation module is applied to the input of a classification module which continuously receives the text being applied to the first stage of the machine.

27. A machine according to claim 26, characterized in that the classification module includes a multiplicity of fields each containing a fragment, and in that the fields are in a hierarchy which is a function of scores given by the calculation module to the fragments they contain.

28. A machine according to claim 27, characterized in that when all the fields of the classification module are full, the next fragment to arrive is stored or not depending on whether the score it has received from the calculation module is greater than or not greater than the score of the stored fragment having the lowest score.

**Ansprüche**

1. Modul zur Verarbeitung eines aus einer Folge von Elementen aus numerischen Zeichen gebildeten Datensatzes mit dem Ziel der syntaktischen Analyse zur Wiedererkennung, Übersetzung oder ähnlichem, bestehend aus einer Eingangseinheit (11) zur Bereitstellung der zu prüfenden Elemente des Datensatzes, einem Speicher (19) mit einer Vielzahl abgespeicherter Zeilen mit Ausführungsbefehlen, die durch eine Adressiereinheit (24) in Abhängigkeit der zu prüfenden Elemente in der Eingangseinheit (11) adressierbar sind, wobei jede Zeile des Speichers ein einem Befehlscode zugeordnetes Feld und ein einer dem Vergleichselement entsprechenden Information zugeordnetes Feld aufweist, mit der zusammen der Befehlscode in dem vorbenannten Feld auszuführen ist, einem Komparator (17), der mit dem zu prüfenden Element entsprechend der adressierten Befehlszeile verfährt, einer Steuereinheit (16) und einer Ausgangseinheit (55) zur Auswertung des Vergleichsergebnisses, dadurch gekennzeichnet, daß jede Zeile des Speichers (19) ein freies Feld zur Aufnahme des Vergleichselementes ($26_2$) und mindestens ein erstes und ein zweites Feld ($26_3$, $26_4$, $26_5$) für je eine Adresse einer Befehlszeile des Speichers enthält, daß eine Verzweigungsvorrichtung in der Art einer Torschaltung (42, 44, 46) von der Steuereinheit (16) gesteuert wird, um das erste Feld ($26_4$) oder das zweite Feld ($26_3$, $26_4$, $26_5$) in Abhängigkeit des Ausgangs des Komparators (17), der eine Übereinstimmung zwischen dem zu prüfenden Element in der Eingangseinheit (11) und dem Vergleichselement ($26_2$) anzeigt, mit der Adressiereinheit (24) des Befehlsspeichers (19) verbindet und daß jedes zu prüfende Element in der Eingangseinheit (11) und jedes Vergleichselement in dem entsprechenden Feld der Befehlszeile ein Zeichen ist.

2. Modul nach Anspruch 1, dadurch gekennzeichnet, daß die Steuereinheit (16) derart betrieben wird, daß in Abhängigkeit des Ausgangs (65, 66, 67) des Komparators (17) die Prüfung des folgenden Zeichens in der Eingangseinheit (11) bewirkt oder nicht bewirkt wird.

3. Modul nach Anspruch 2, dadurch gekennzeichnet, daß die Prüfung des folgenden Zeichens aus der Eingangseinheit (11) nur dann zugelassen wird, wenn die Steuereinheit (16) die Übereinstimmung am Ausgang (65) des Komparators (17) feststellt.

4. Modul nach einem der Ansprüche 1 bis 3, dadurch gekennzeichnet, daß das Feld ($26_1$) des jede Befehlszeile bezeichnenden Codes mit der Steuereinheit verbunden ist, um in Abhängigkeit dieses Codes eine auszuführende Schrittfolge unter vielen möglichen Schrittfolgen zu bestimmen.

5. Modul nach einem der Ansprüche 1 bis 4, dadurch gekennzeichnet, daß das regelmäßig für das Vergleichszeichen reservierte Feld ($26_2$) in den Zeilen des Befehlsspeichers über die Verzweigungsvorrichtung mit der Adressiereinheit (24) verbindbar ist.

6. Modul nach einem der Ansprüche 1 bis 5, dadurch gekennzeichnet, daß jede Befehlszeile (22) drei Adressfelder ($26_3$, $26_4$, $26_5$) aufweist und daß die Verzweigungsmittel unter dem Einfluß von einem der drei Felder zur Steuerung der Adressiereinheit (24) des Speichers geeignet sind, je nach dem, ob das Vergleichsergebnis am Ausgang des Komparators (17) anzeigt, daß das zu prüfende Zeichen größer, kleiner oder gleich dem in dieser Befehlszeile enthaltenen Vergleichszeichen ist.

7. Modul nach einem der Ansprüche 1 bis 6, dadurch gekennzeichnet, daß es ein mit dem Ausgang der Verzweigungsvorrichtung verbundenes Register (36) umfaßt, das den an seinem Eingang anstehenden numerischen Wert unter der Steuerung einer Takteinheit an die Adressiereinheit weitergibt, um die dem numerischen Wert entsprechende Befehlszeile zur Ausführung anzuwählen.

8. Modul nach Anspruch 1, dadurch gekennzeichnet, daß es einen freien Speicherblock (59) aufweist, der von der Steuereinheit (16) angesteuert, zur Aufnahme eines oder mehrerer vom Register (36) abgegebener numerischer Werte vorgesehen ist.

9. Modul nach Anspruch 8, dadurch gekennzeichnet, daß Mittel vorgesehen sind, um von der Steuereinheit gesteuert, einen in den Speicherblock eingelesenen Wert wieder dem Register (36) aufzugeben.

10. Modul nach Anspruch 4, dadurch gekennzeichnet, daß der Speicher (19) Befehlszeilen enthält, deren Codes sich an vier Prinzipcodes anschließen.

11. Modul nach Anspruch 10, dadurch gekennzeichnet, daß einem ersten Code folgend das Vergleichszeichen mit einem Zeichen des im Eingang befindlichen Datensatzes verglichen wird, daß, entsprechend dem Vergleichsergebnis bei Übereinstimmung oder Nicht-Übereinstimmung, der numerische Wert des entsprechenden Feldes in der Befehlszeile in den Eingang des im Ausgang der Verzweigungsvorrichtung liegenden Registers eingegeben wird und daß lediglich im Falle der Übereinstimmung ein Vorrücken eines Zeichens des im Eingang liegenden Datensatzes bewirkt wird.

12. Modul nach Anspruch 10, mit einem Speicherblock, dadurch gekennzeichnet, daß gemäß einem zweiten Code bzw. einem Code 2 zwei Durchläufe der Befehlszeile vorgesehen sind, wobei in einem ersten Durchlauf die laufende Adresse in den Speicherblock (59) eingegeben wird und die in der Befehlszeile des Codes enthaltene Adresse zur Ausführung kommt, und wobei in einem zweiten Durchlauf das Vergleichsergebnis eines vorhergegangenen Befehldurchlaufs festgehalten wird, um über die Verzweigungsvorrichtung auf den Eingang des Adressregisters (36) den entsprechenden numerischen Wert zu geben.

13. Modul nach Anspruch 12, dadurch gekennzeichnet, daß weder beim ersten noch beim zweiten Durchlauf die Zeichen in der Eingangseinheit vorgerückt werden.

14. Modul nach Anspruch 10, dadurch gekennzeichnet, daß es einen dritten Code oder Code 3 enthält, der bei Anwendung auf die Steuereinheit (16) die Aufgabe einer Adresse auf den Eingang der Adressiereinheit (36, 24) bewirkt, die der bestimmten Adresse aus der Befehlszeile entspricht, die diesen Code enthält.

15. Modul nach Anspruch 10, mit einem Speicherblock, dadurch gekennzeichnet, daß es einen vierten Code oder Code 4 enthält, der bei Anwendung auf die Steuereinheit (16) durch diese das Vorrücken eines Zeichens in der Eingangseinheit (11) immer dann bewirkt, wenn das Vergleichsergebnis « Übereinstimmung » ist, und durch den zwei unterschiedliche Steuerbefehle durch die Steuereinheit (16) bewirkt werden, je nach dem, ob der Speicherblock leer oder nicht leer ist.

16. Modul nach Anspruch 15, dadurch gekennzeichnet, daß bei nicht leerem Speicherblock (59) die Steuereinheit (16) das Vergleichsergebnis abspeichert und die im Speicherblock oben anstehende Adresse, nachdem sie sie abgerufen hat, auf den Eingang der Adressiereinheit (36, 24) gibt.

17. Modul nach Anspruch 15, dadurch gekennzeichnet, daß bei leerem Speicherblock (59) die Steuereinheit (16) in Abhängigkeit des Vergleichsergebnisses der Adresseinheit das Feld aufgibt, das — dem Fall entsprechend — dem Vergleichsergebnis « Übereinstimmung », « kleiner als » oder « größer als » entspricht.

18. Modul nach Anspruch 11 oder 15, dadurch gekennzeichnet, daß es einen weiteren Code enthält, der sich aus einer Mischung des ersten und vierten Codes ergibt und die Wahl des Codes der Mischung in Abhängigkeit des Vergleichs der Zeichen ausgeführt wird.

19. Modul nach einem der Ansprüche 10 bis 17, dadurch gekennzeichnet, daß es vier bezüglich der genannten Codes identische Codes enthält, die jedoch darüber hinaus jeweils den Befehl zum Vorrücken der Zeichen des Datensatzes im Eingang erzeugen.

20. Modul nach Anspruch 19, dadurch gekennzeichnet, daß es acht Codes mit Schritten enthält, die acht ersten Codes entsprechen und daß es weiterhin für solche, die den Codes 1 und 4 entsprechen, die Weitergabe eines Zeichens aus der den Code tragenden Befehlszeile in die Ausgangseinheit (55) steuert.

21. Modul nach Anspruch 19, dadurch gekennzeichnet, daß für die dem Code 3 entsprechenden Codes unabhängig vom Vergleichsergebnis übertragen wird.

22. Modul nach Anspruch 18, dadurch gekennzeichnet, daß es Codes enthält, die von entsprechend den Ansprüchen 19 bis 21 zusammengesetzten Codes abgeleitet sind.

23. Datenverarbeitungsanlage, dadurch gekennzeichnet, daß sie eine Vielzahl von Stufen aufweist, die jeweils ein Modul gemäß einem der vorhergehenden Ansprüche 1 bis 22 enthält.

24. Datenverarbeitungsanlage nach Anspruch 23, dadurch gekennzeichnet, daß der Ausgang eines Moduls der ersten Stufe mit dem Eingang eines Moduls der folgenden Stufe verbunden ist.

25. Datenverarbeitungsanlage nach Anspruch 24, dadurch gekennzeichnet, daß die von jeder Stufe abgegebenen Informationen auf die Eingänge eines Rechenmoduls gegeben sind.

26. Datenverarbeitungsanlage nach Anspruch 25, dadurch gekennzeichnet, daß die von dem Rechenmodul abgegebene Information im Eingang eines Klassierungsmoduls eingegeben ist, das laufend den in der ersten Stufe der Anlage eingegebenen Text empfängt.

27. Datenverarbeitungsanlage nach Anspruch 26, dadurch gekennzeichnet, daß das Klassierungsmodul eine Vielzahl von Feldern enthält, die jeweils einem Teilstück zugeordnet sind und die mittels der vom Rechenmodul aufgrund der in den Feldern enthaltenen Teilstücke zugeordneten Nummern in eine Rangordnung eingebunden sind.

28. Datenverarbeitungsanlage nach Anspruch 27, dadurch gekennzeichnet, daß bei Besetzung aller Felder des Klassierungsmoduls ein neu ankommendes Teilstück abgelegt oder nicht abgelegt wird, je nach dem, ob die ihm vom Rechenmodul zugeordnete Nummer größer oder nicht groößer als die des bereits abgelegten Teilstückes mit der niedrigsten Nummer ist.

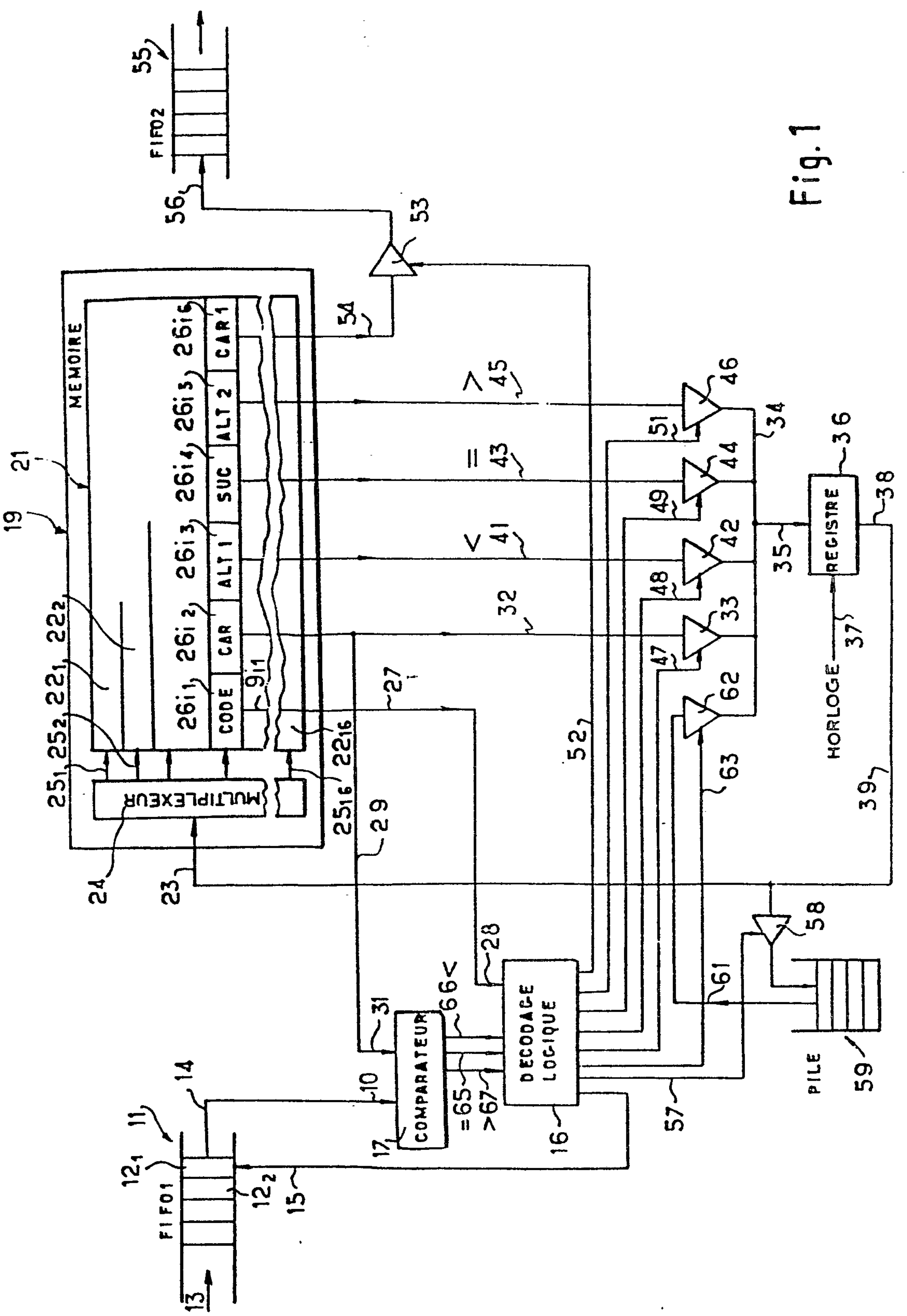
MEMOIRE
MULTIPLEXEUR
CODE
CAR
ALT 1
SUC
ALT 2
CAR 1
FIFO1
FIFO2
COMPARATEUR
DECODAGE LOGIQUE
REGISTRE
HORLOGE
PILE

Fig. 1

Fig. 2

$26_{22}$ $26_{32}$

$26_{11}$ $26_{12}$ $26_{13}$ $26_{14}$ $26_{15}$

| | | CODE | CAR | ALT 1 | SUC | ALT 2 | CAR 1 | |
|---|---|---|---|---|---|---|---|---|
| 3,1 → | 1 | 1 | ( | 5 | 2 | 5 | — | $26_1$ |
| 5,2 → | 2 | 2 | 1 | 13 | 3 | 13 | — | $26_2$ |
| 6 → | 3 | 1 | + | 6 | 4 | 6 | — | $26_3$ |
| | 4 | 2 | 1 | 13 | 3 | 13 | — | $26_4$ |
| 4 → | 5 | 4 | X | 13 | 8 | 13 | — | $26_5$ |
| 7 → | 6 | 3 | — | — | 3 | — | — | $26_6$ |
| 8 → | 7 | 4 | ) | 13 | 8 | 13 | — | $26_7$ |
| 9 → | 8 | 9 | ƃ | 13 | 9 | 13 | V | $26_8$ |
| 10 → | 9 | 11 | — | — | 10 | — | R | |
| 11 | 10 | 11 | — | — | 11 | — | A | |
| 12 | 11 | 11 | — | — | 12 | — | I | |
| | 12 | 11 | — | — | 1 | — | ƃ | |
| | 13 | 11 | — | — | 14 | — | F | |
| | 14 | 11 | — | — | 15 | — | A | |
| | 15 | 11 | — | — | 16 | — | U | |
| | 16 | 11 | — | — | 17 | — | X | |
| | 17 | 15 | — | 17 | 1 | 17 | ƃ | |

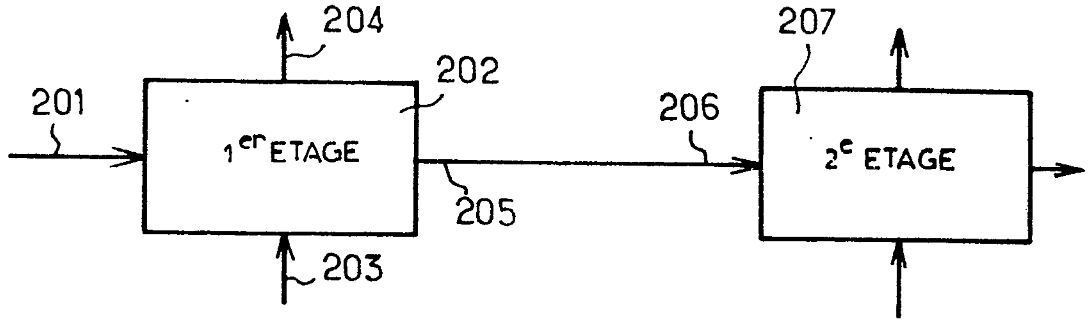
204
207
202
201
206
1er ETAGE
2e ETAGE
205
203

Fig. 5

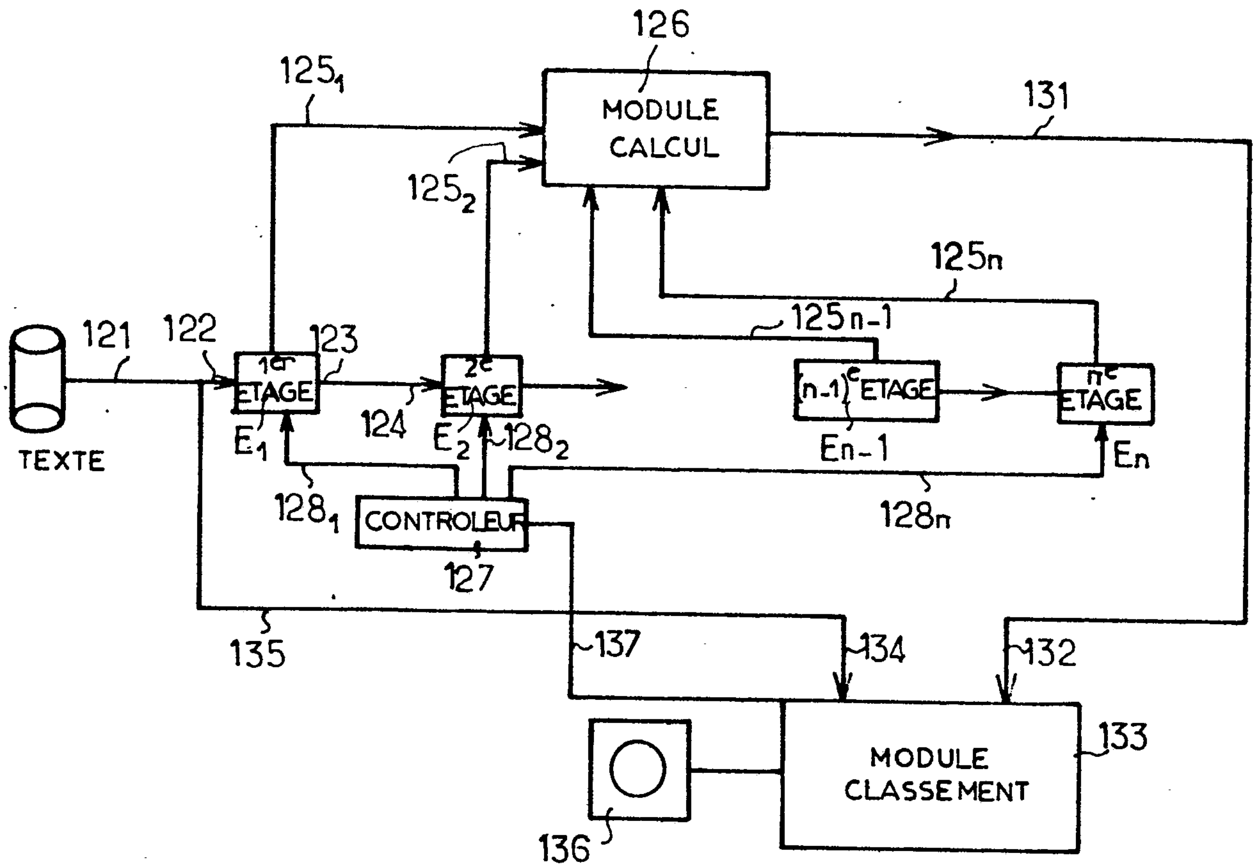
126
125₁
MODULE
CALCUL
131
125₂
125n
121
122
125n-1
123
TEXTE
1er ETAGE
2e ETAGE
(n-1)e ETAGE
ne ETAGE
124
E1
E2
128₂
En-1
En
128₁
CONTROLEUR
128n
127
135
137
134
132
MODULE
CLASSEMENT
133
136

Fig. 3

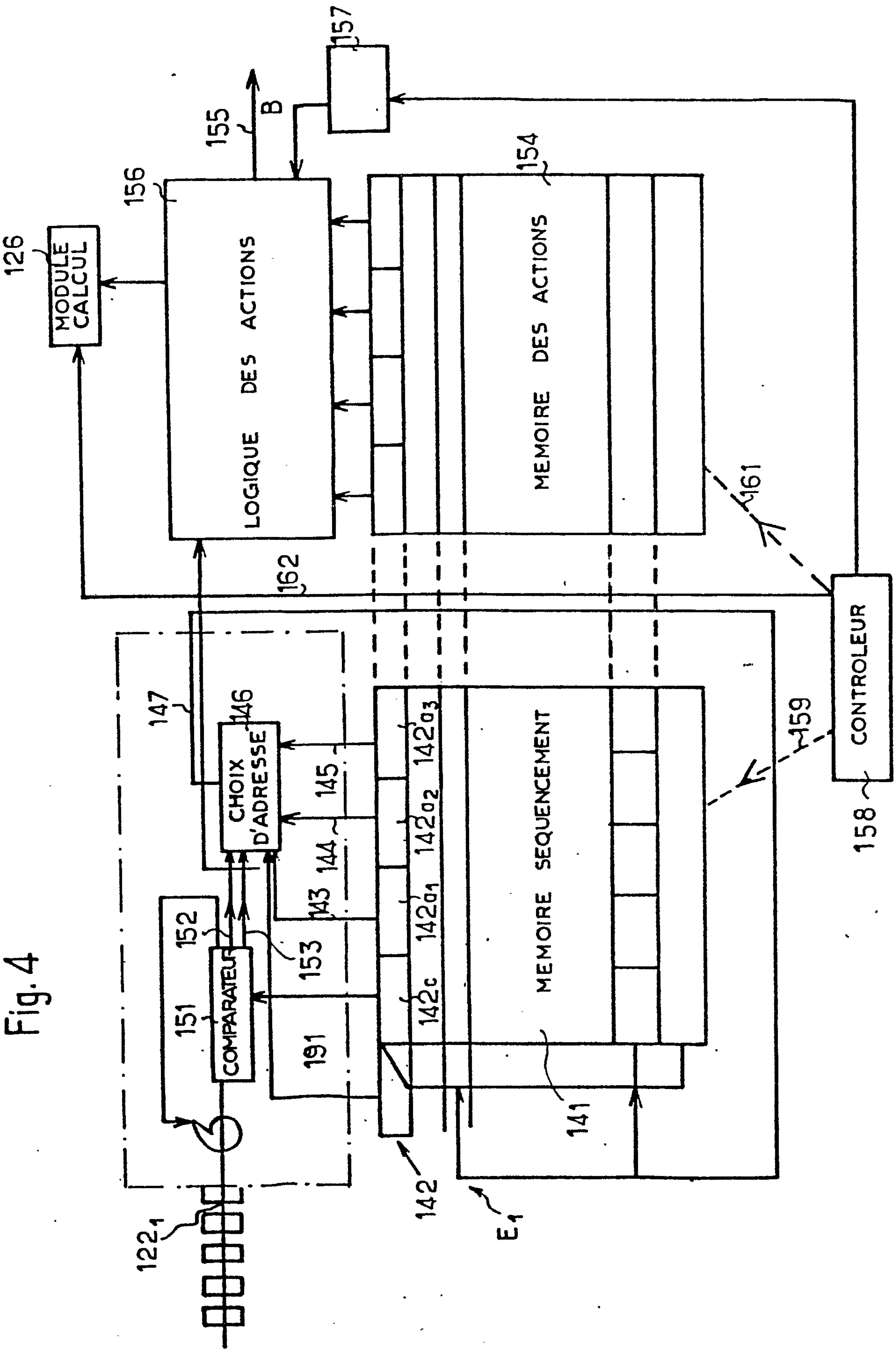
MODULE CALCUL
126
156
155
B
157
154
LOGIQUE DES ACTIONS
MEMOIRE DES ACTIONS
161
162
CONTROLEUR
158
159
147
146
CHOIX D'ADRESSE
145
144
143
142a1
142a2
142a3
142c
COMPARATEUR
151
152
153
191
MEMOIRE SEQUENCEMENT
141
142
E1
122,1

Fig. 4